# EUROPÄISCHE PATENTANMELDUNG

(11) **EP 4 838 196 A1**
(43) Veröffentlichungstag der Anmeldung: **11.11.2026**
(21) Anmeldenummer: 25175381.0
(22) Anmeldetag: 09.05.2025
(51) Int. Cl.: G01N 1/22, G01N 35/04

(54) **VORRICHTUNG ZUR ÜBERWACHUNG VON VERUNREINIGUNGEN IN EINER KONTROLLIERTEN UMGEBUNG, DEPONIERVORRICHTUNG, VERFAHREN ZUR ÜBERWACHUNG VON VERUNREINIGUNGEN IN EINER KONTROLLIERTEN UMGEBUNG**

(71) Anmelder: SKAN AG, 4123 Allschwil (CH)
(72) Erfinder: BROM, Vincent, 68220 Buschwiller (FR); LEHMANN, Frank Martin, 4102 Binningen (CH); LANDES, Robert, 79713 Bad Säckingen (DE)
(74) Vertreter: Mertzlufft-Paufler, Cornelius

(57) **Zusammenfassung**

Der Erfindung liegt die Aufgabe zugrunde, über eine Vorrichtung (1) mit mehreren in einem Magazin (8) stapelbaren Deponiermitteln (3), dessen jeweilige Position innerhalb des Magazins (8) gewechselt werden kann, eine Überwachung von Verunreinigungen in einer kontrollierten Umgebung (2) zu vereinfachen und einen schnellen Wechsel von gebrauchten Deponiermitteln (3), die zur Überwachung der Verunreinigungen verwendet wurden, zu ermöglichen und diese durch im Magazin (8) positionierte, ungebrauchte Deponiermittel (3) auszutauschen, wobei die gebrauchten Deponiermittel (3) ebenfalls im Magazin (8) zwischengespeichert werden (Fig. 1).

## Beschreibung

Die Erfindung betrifft eine Vorrichtung zur Überwachung von Verunreinigungen in einer kontrollierten Umgebung, wobei ein Deponiermittel, insbesondere ein Nährmedium, in einer Deponiermittelaufnahme präsentierbar ist und ein Luftstrom von der Deponiermittelaufnahme zu einem Sauganschluss geführt ist, wobei mehrere Deponiermittel in einem Magazin vorhaltbar sind.

Die Erfindung betrifft weiter eine Deponiervorrichtung mit einem Gehäuse, das einen Innenraum aufweist, in dem ein Deponiermittel, insbesondere ein Nährmedium, angeordnet ist, wobei an einer Oberseite des Gehäuses eine Einlassöffnung ausgebildet ist, die in den Innenraum führt, und wobei an einer Unterseite des Gehäuses ein Sauganschluss ausgebildet ist, über den Luft aus dem Innenraum absaugbar ist.

Die Erfindung betrifft schließlich ein Verfahren zur Überwachung von Verunreinigungen in einer kontrollierten Umgebung.

Der Erfindung liegt die Aufgabe zugrunde, eine Überwachung von Verunreinigungen in einer kontrollierten Umgebung zu vereinfachen und einen schnellen Wechsel von Deponiermitteln, die zur Überwachung der Verunreinigungen verwendet werden, zu ermöglichen.

Vorrichtungen zur Überwachung von Verunreinigungen in einer kontrollierten Umgebung sind aus der Praxis bekannt, beispielsweise wird hierzu ein Nährmedium in die kontrollierte Umgebung, beispielsweise einen Isolator, eingebracht und von einem Luftstrom passiert.

Zur Lösung der genannten Aufgabe sind erfindungsgemäß die Merkmale des Anspruchs 1 vorgesehen. Insbesondere wird somit zur Lösung der genannten Aufgabe bei einer Vorrichtung der eingangs beschriebenen Art erfindungsgemäß vorgeschlagen, dass das Magazin zwischen der Deponiermittelaufnahme und dem Sauganschluss angeordnet ist und dass der von der Deponiermittelaufnahme abgesaugte Luftstrom an dem Magazin vorbeigeführt ist.

Eine kontrollierte Umgebung im Sinne der Erfindung kann beispielsweise als ein begrenzter Raumbereich charakterisierbar sein, in welchem definierte Umgebungsbedingungen, insbesondere in Bezug auf eine Luftreinheit und/oder eine Oberflächenreinheit, schaffbar und/oder aufrechterhaltbar sind, beispielsweise durch eine Kontrolle eines Luftaustauschs mit einer Außenwelt der kontrollierten Umgebung. Die Kontrolle des Luftaustausches kann beispielsweise durch einen völligen Ausschluss des Luftaustausches im Normalbetrieb (beispielsweise bis auf eine geschlossene Luftzirkulation) und/oder eine konsequente Vorgabe einer Richtung des Luftaustausches (in die kontrollierte Umgebung oder aus der kontrollierten Umgebung) realisiert sein. Beispiele kontrollierter Umgebungen können Isolatoren, Restricted Access Barrier Systems (zugangsbeschränkte Barrierensysteme, insbesondere vom offenen oder geschlossenen Typ), Containments, Gloveboxes und/oder Reinräume im Allgemeinen umfassen.

Innerhalb der kontrollierten Umgebung, insbesondere des Containments oder des Isolators, können somit verschiedene Prozesse zur Verarbeitung verschiedenster Erzeugnisse, beispielsweise pharmazeutischer Erzeugnisse, erfolgen. Solche pharmazeutischen Erzeugnisse können beispielsweise jeweils einen pharmazeutischen Behälter zu einer Aufnahme eines pharmazeutischen Präparats aufweisen. Eine Liste von Beispielen solcher pharmazeutischen Behälter umfasst zumindest Vials, Spritzen, Karpulen (Zylinderampullen) und sonstige befüllbare pharmazeutische Behälter und alles, was eine aseptische Handhabung verlangt.

Ein weiteres Merkmal einer kontrollierten Umgebung kann sein, dass die Luft gereinigt eingebracht werden kann. Dies kann über Filter, insbesondere Schwebstofffilter (HEPA-Filter - High Efficiency Particulate Airfilter) gewährleistet werden, welche beispielsweise in Isolatoren möglichst großflächig das obere Ende einer kontrollierten Umgebung bilden.

Ein weiteres Merkmal einer kontrollierten Umgebung kann sein, dass die Luft kontrolliert führbar ist. Dies erschwert ungewollte Ablagerungen von Verunreinigungen.

Allgemein kann gesagt werden, dass es essenziell ist, Verunreinigungen innerhalb der kontrollierten Umgebung zu detektieren, da die innerhalb der kontrollierten Umgebung prozessierten Erzeugnisse frei von Kontaminationen und somit Verunreinigungen sein sollten.

Das Deponiermittel, insbesondere das Nährmedium, kann beispielsweise geleeartig, fest insbesondere als Agar, oder flüssig, insbesondere als Bouillon, sein und kann dazu dienen, mikrobiologisches Wachstum der Verunreinigungen zu detektieren und/oder nachzuweisen. Ferner kann beispielsweise vorgesehen sein, dass das Nährmedium aus einem Material besteht, das sich auf dem Nährmedium auflöst. Das Deponiermittel kann beispielsweise zuckerfrei und/oder proteinbasiert sein. Somit kann das Deponiermittel zwar nicht unmittelbar zu einer Inkubation geeignet sein. Von Vorteil ist jedoch, dass das Deponiermittel in diesem Fall (zum Beispiel als Gelatinefilter) nicht oder nur sehr langsam austrocknet, was bei Nährmedien als Deponiermittel einen länger andauernden Einsatz erschwert.

Allgemein kann als Deponiermittel im Sinne der Erfindung ein im Strömungsweg des Fluidstroms angeordnetes Element verstanden werden, das es erlaubt, mikrobiologische Verunreinigungen einzufangen und/oder aufzunehmen.

Dadurch, dass der von der Deponiermittelaufnahme abgesaugte Luftstrom an dem Magazin vorbeigeführt ist, ist besonders vorteilhaft keine substantielle Vergrößerung einer Standfläche bei einem Nachrüsten eine Vorrichtung erforderlich, die nur jeweils ein Deponiermittel verarbeiten kann.

Es ist somit eine Adaptierbarkeit ermöglicht, so dass das Magazin an bestehende Schnittstellen, über die beispielsweise einzelne Deponiermittel zur Überwachung von Verunreinigungen in der kontrollierten Umgebung angebracht werden können, gekoppelt werden kann, ohne dass hierdurch ein substantiell vergrößerter Bauraum und/oder Standfläche genutzt wird.

Besonders vorteilhaft kann somit auch ein Kontaminationsrisiko reduziert werden, da nicht nach jedem "Sampling" das Deponiermittel von einem Bediener getauscht werden muss, wobei bei jedem Austausch die Gefahr einer Kontamination der kontrollierten Umgebung besteht. Vielmehr können mehrere Deponiermittel genutzt werden, bevor das gesamte Magazin ausgetauscht wird. Unter dem Begriff "Sampling" kann das Durchströmen des Deponiermittels von dem Luftstrom verstanden werden, worüber mögliche innerhalb der kontrollierten Umgebung vorhandenen, insbesondere mikrobiologische, Verunreinigungen in Kontakt mit dem Deponiermittel gebracht werden können. Um den Luftstrom in Kontakt mit dem Deponiermittel zu bringen, kann vorgesehen sein, dass an dem Sauganschluss ein Unterdruck erzeugt wird. Der Sauganschluss kann somit als Luftstromleitung ausgebildet sein, die an dem Magazin vorbeigeführt ist.

Bei einer weiteren vorteilhaften Ausgestaltung kann vorgesehen sein, dass das Magazin ein first-in-first-out-Speicher oder ein Speicher mit unabhängig voneinander zugänglichen Speicherpositionen ist.

Unter "first-in-first-out-Speicher" kann beispielsweise verstanden werden, dass die Deponiermittel im Magazin im Betrieb in genau der Reihenfolge einsetzbar sind, in der sie auch entnehmbar sind. Dies kann einen konstruktiv einfachen Aufbau ohne dedizierte Fördervorrichtung am Magazin ermöglichen. Ein first-in-first-out Speicher kann einen endlosen Austausch der gespeicherten Elemente durch gleichartige Befüll- und Entnahmevorgänge ermöglichen.

Durch einen Speicher mit unabhängig voneinander zugänglichen Speicherpositionen können besonders vorteilhaft einfache Bewegungsabläufe beim Deponiermittelaustausch ermöglicht werden.

Bei einer weiteren vorteilhaften Ausgestaltung kann vorgesehen sein, dass das Magazin als auswechselbare Kassette ausgebildet ist.

Besonders vorteilhaft können somit beispielsweise alle Deponiermittel gemeinsam ausgetauscht werden.

Bei einer weiteren vorteilhaften Ausgestaltung der Erfindung kann vorgesehen sein, dass eine Handhabungseinrichtung zu einem Wechsel des Deponiermittels aus dem Magazin eingerichtet ist.

Besonders vorteilhaft kann somit ein automatisierter Austausch eines beladenen Deponiermittels ermöglicht werden.

Als Handhabungsvorrichtung kann beispielsweise ein Roboter mit Greifelement dienen, über den die Deponiermittel gehandhabt werden können.

Beispielsweise kann vorgesehen sein, dass einzelne Deponiermittel, beispielsweise das Deponiermittel, das zuvor von dem Luftstrom durchströmt wurde, von der Handhabungseinrichtung gegriffen und an eine untere Position innerhalb des Magazins platziert wird, wodurch besonders vorteilhaft alle Deponiermittel axial verschoben und ein nächstes Deponiermittel über die Deponiermittelaufnahme dem Luftstrom präsentiert werden kann. Es kann somit beispielsweise das bereits beschriebene first-in-first-out-Prinzip des Magazins realisiert werden.

Bei einer weiteren vorteilhaften Ausgestaltung der Erfindung kann vorgesehen sein, dass das Magazin eine vorzugsweise paarweise kontaktierende Stapelanordnung von vorzugsweise gekapselten Deponiermitteln enthält.

Besonders vorteilhaft kann somit ermöglicht werden, dass die Deponiermittel gemeinsam bewegbar sind, beispielsweise durch ein Einschieben eines weiteren, insbesondere gebrauchten, Deponiermittels.

Unter "gekapselt" kann beispielsweise verstanden werden, dass die Deponiermittel voneinander und/oder von einer äußeren Umgebung räumlich getrennt sind.

Bei einer weiteren vorteilhaften Ausgestaltung der Erfindung kann vorgesehen sein, dass das Magazin zur Aufnahme von Deponiermitteln, die jeweils in einer Kapselung angeordnet sind, eingerichtet ist.

Unter "Kapselung" kann, wie zuvor erwähnt, verstanden werden, dass die Deponiermittel räumlich voneinander und/oder von einer die Kapselung umgebenden Umgebung, beispielsweise der Umgebungsluft, getrennt sind. Besonders vorteilhaft ist somit ein Schutz vor unkontrollierter Kontamination bis zum Gebrauch und/oder nach dem Gebrauch der Deponiermittel gegeben. Es kann demnach verhindert werden, dass Verunreinigungen, die nicht aus der kontrollierten Umgebung stammen, das Deponiermittel kontaktieren.

Besonders vorteilhaft kann das Magazin ferner eine Vielzahl von Deponiermitteln aufnehmen, wobei jedes Deponiermittel zur Überwachung auf Verunreinigungen genutzt werden kann, ohne dass diese einzeln händisch gewechselt werden müssen.

Insbesondere sind die Deponiermittel in einer Petrischale oder einem Impaktor angeordnet.

Besonders vorteilhaft können somit bekannte Mittel zur Kapselung des Deponiermittels genutzt werden.

Bei einer weiteren vorteilhaften Ausgestaltung kann vorgesehen sein, dass die Deponiermittelaufnahme als ein Impaktor ausgebildet ist.

Impaktoren bieten ein bevorzugtes Messverfahren, da durch diese eine spätere Inkubation ermöglicht werden kann.

Bei einer weiteren vorteilhaften Ausgestaltung kann vorgesehen sein, dass das Magazin an einem von der Deponiermittelaufnahme abgewandten Ende eine Zugangsöffnung aufweist.

Besonders vorteilhaft kann somit eine Zuführung gebrauchter Deponiermittel ohne Störung eines aktuellen Deponierprozesses ermöglicht werden. Dabei kann beispielsweise vorgesehen sein, dass ein gebrauchtes Deponiermittel von der oder einer Handhabungseinrichtung gegriffen und zur Zugangsöffnung gehandhabt und eingeschoben wird, sodass ein nächstes, unverbrauchtes Deponiermittel in der Deponiermittelaufnahme präsentierbar ist.

Bei einer weiteren vorteilhaften Ausgestaltung der Erfindung kann vorgesehen sein, dass das Magazin an einem der Deponiermittelaufnahme zugewandten Ende eine Abgabeöffnung aufweist.

Besonders vorteilhaft können somit kurze Wege zur Messposition erreicht werden.

Bei einer weiteren vorteilhaften Ausgestaltung der Erfindung kann vorgesehen sein, dass das Magazin an der oder einer Zugangsöffnung ein Rückhaltemittel aufweist.

Durch das Rückhaltemittel kann besonders vorteilhaft ein Herausfallen der insbesondere aufeinander gestapelten Deponiermittel verhindert werden, wenn das Magazin zum Einschieben eines gebrauchten Deponiermittels von unten geöffnet wird.

Bei einer weiteren vorteilhaften Ausgestaltung kann die Erfindung vorsehen, dass eine Fördervorrichtung zu einem Transport von vorzugsweise gekapselten Deponiermitteln durch das Magazin eingerichtet ist.

Besonders vorteilhaft kann hierdurch eine schrittweise automatisierte Entleerung des Magazins zum Gebrauch ermöglicht werden.

Bei einer weiteren vorteilhaften Ausgestaltung der Erfindung kann vorgesehen sein, dass die oder eine Fördervorrichtung zu einem Bewegen einer Magazinwand eingerichtet ist.

Die über die Fördervorrichtung zu bewegende Magazinwand kann dabei die Wand sein, die eine Außenstruktur der oder einer Kapselung der Deponiermittel kontaktiert.

Besonders vorteilhaft kann dies durch eine einfache Mechanik realisiert werden, da die Fördervorrichtung von außen an der Magazinwand angreifen kann.

Bei einer weiteren vorteilhaften Ausgestaltung der Erfindung kann vorgesehen sein, dass eine Leseeinrichtung zum Auslesen wenigstens einer an den vorzugsweise gekapselten Deponiermitteln angebrachten Information eingerichtet ist, insbesondere bei einem in der Deponiermittelaufnahme angeordneten Deponiermittel.

Hierdurch kann überaus vorteilhaft eine Dokumentation und/oder Zuordnung der Deponiermittel zum Einsatzzeitpunkt ermöglicht werden.

Die Leseeinrichtung kann dabei beispielsweise von einem optischen Sensor gebildet sein, über den die angebrachten Informationen, beispielsweise über einen Barcode, einen QR-Code, Artikelnummern oder weitere an den Deponiermitteln angebrachten Informationen ausgelesen werden können.

Bei einer weiteren vorteilhaften Ausgestaltung der Erfindung kann vorgesehen sein, dass die oder eine Handhabungseinrichtung zu einem Öffnen und/oder Schließen der oder einer Kapselung der Deponiermittel eingerichtet ist.

Besonders vorteilhaft kann das Deponiermittel somit vorzugsweise automatisiert aus der Kapselung zur weiteren Prozessierung, beispielsweise zum Inkubieren des Nährmediums, entnommen werden, sobald diese durch die Handhabungseinrichtung zugänglich gemacht wurden.

Ferner ist vorteilhaft, dass Standard-Verpackungen automatisiert verarbeitbar sind.

Bei einer weiteren vorteilhaften Ausgestaltung der Erfindung kann vorgesehen sein, dass die oder eine Handhabungsvorrichtung und das Magazin und/oder die Deponiermittelaufnahme an einem gemeinsamen Träger befestigt sind, insbesondere an dem Sauganschluss.

Besonders vorteilhaft kann somit eine kompakte Baugruppe realisiert werden, sodass ein geringer Platzbedarf in der Standfläche realisiert werden kann. Die erfindungsgemäße Vorrichtung ist somit auch bei beengten Platzverhältnissen Nachrüstbar.

Bei einer weiteren vorteilhaften Ausgestaltung kann vorgesehen sein, dass eine weitere Deponiermittelaufnahme für eine passive Luftkeimsammlung eingerichtet ist.

Dabei kann beispielsweise vorgesehen sein, dass die weitere Deponiermittelaufnahme außerhalb des Magazins angeordnet ist.

Besonders vorteilhaft ist somit eine zusätzliche Kontrollmessung des Luftstroms der kontrollierten Umgebung möglich, ohne dass hierfür ein Saugstrom benötigt wird.

Bei einer weiteren vorteilhaften Ausgestaltung der Erfindung kann vorgesehen sein, dass das Magazin eine Deponiermittelablage hat, welche mit der oder eine Zugangsöffnung zusammenwirkt, um das Magazin mit einem vorzugsweise gekapselten Deponiermittel zu bestücken.

Somit können besonders vorteilhaft mechanisch einfach gebrauchte Deponiermittel in das Magazin geschoben werden, um frische Deponiermittel in Gebrauchsposition zu bringen.

Alternativ oder zusätzlich sind zur Lösung der genannten Aufgabe erfindungsgemäß die Merkmale des nebengeordneten, auf eine Deponiervorrichtung gerichteten Anspruchs vorgesehen. Insbesondere wird somit zur Lösung der genannten Aufgabe bei einer Deponiervorrichtung der eingangs beschriebenen Art erfindungsgemäß vorgeschlagen, dass zwischen der Unterseite und der Oberseite ein Bypass derart ausgebildet ist, dass in einer Stapelanordnung von Deponiervorrichtungen der Bypass einer unten liegenden Deponiervorrichtung wahlweise mit dem Bypass oder dem Sauganschluss einer oben liegenden Deponiervorrichtung fluidisch verbindbar ist.

Bei den im Anspruch definierten Merkmalen kann es sich um bereits beschriebene und/oder beanspruchte Merkmale handeln.

Die Deponiervorrichtungen lassen sich somit besonders vorteilhaft mit einfachen Mitteln sukzessive aktivieren.

Bei einer weiteren vorteilhaften Ausgestaltung der Erfindung kann vorgesehen sein, dass das Deponiermittel mit der Einlassöffnung einen Impaktor bildet.

Bei dem Impaktor kann es sich um den oder einen bereits beschriebenen und/oder beanspruchten Impaktor handeln, wodurch bereits beschriebene Vorteile erreicht werden können.

Bei einer weiteren vorteilhaften Ausgestaltung kann die Erfindung vorsehen, dass die Einlassöffnung mit einem abnehmbaren Verschluss versehen ist.

Besonders vorteilhaft kann somit erreicht werden, dass die Deponiermittel bis zum Gebrauch, gegebenenfalls auch nach dem Gebrauch, verschlossen werden können, wodurch wiederum eine unkontrollierte Kontamination des Deponiermittels verhindert werden kann.

Dabei kann beispielsweise vorgesehen sein, dass der Verschluss automatisiert abnehmbar und separat lagerbar ist.

Bei einer weiteren vorteilhaften Ausgestaltung kann vorgesehen sein, dass der Sauganschluss mit einem Sicherungselement versehen ist, der außerhalb eines Gebrauchszustands den Innenraum abschließt.

Das Sicherungselement kann dabei beispielsweise als Rückschlagventil ausgebildet sein, wodurch wiederum vorteilhafterweise ein Rückströmen des Luftstroms entgegen der vorgesehenen Strömungsrichtung und somit eine unkontrollierte Kontamination des Innenraums außerhalb des Gebrauchs verhindert werden kann.

Bei einer weiteren vorteilhaften Ausgestaltung der Erfindung kann vorgesehen sein, dass die wahlweise herstellbaren fluidischen Verbindungen durch eine Relativbewegung der Deponiervorrichtungen, insbesondere durch eine Drehung der Deponiervorrichtungen gegeneinander, wechselbar sind.

Besonders vorteilhaft kann somit für jedes Deponiermittel ein Fluidzugang für den Fluidstrom hergestellt werden, vorzugsweise unabhängig von einer Position der Deponiermittel innerhalb des oder eines Magazins.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe ein Verfahren zur Überwachung von Verunreinigungen in einer kontrollierten Umgebung unter Verwendung einer bereits beanspruchten Vorrichtung nach einem der Ansprüche 1 bis 17, insbesondere mit einer bereits beanspruchten Deponiervorrichtung nach einem der Ansprüche 18 bis 22, vorgeschlagen.

Hierdurch können bereits beschriebene Vorteile erreicht werden.

Bei einer weiteren vorteilhaften Ausgestaltung der Erfindung kann vorgesehen sein, dass unbenutzte Deponiermittel, vorzugsweise gekapselt, im Magazin bereitgehalten werden. Somit können nach Benutzung eines Deponiermittels direkt weitere, noch unbenutzte Deponiermittel nach und nach dem Luftstrom präsentiert werden.

Bei einer weiteren vorteilhaften Ausgestaltung kann vorgesehen sein, dass im Luftstrom exponierte Deponiermittel, vorzugsweise gekapselt, in das Magazin verbracht werden.

Dies kann beispielsweise in bereits beschriebener Art und Weise erfolgen, wodurch bereits beschriebene Vorteile erreicht werden können.

Bei einer weiteren vorteilhaften Ausgestaltung kann vorgesehen sein, dass durch ein Einbringen eines im Luftstrom exponierten, vorzugsweise gekapselten, Deponiermittels in das Magazin ein unbenutztes, vorzugsweise gekapseltes, Deponiermittel aus dem Magazin in die Deponiermittelaufnahme ausgegeben wird.

Besonders vorteilhaft kann somit ein schneller und/oder automatisierter Wechsel der Deponiermittel erfolgen.

Bei einer weiteren vorteilhaften Ausgestaltung der Erfindung kann vorgesehen sein, dass ein Saugkanal durch eine Relativbewegung einer ersten Deponiervorrichtung einer Stapelanordnung gegen eine folgende Deponiervorrichtung an den Innenraum der ersten Deponiervorrichtung fluidisch angeschlossen wird, insbesondere wobei der Saugkanal zumindest abschnittsweise durch die folgende Deponiervorrichtung, insbesondere durch deren Bypass zu deren Innenraum, geführt ist.

Besonders vorteilhaft kann der Luftstrom somit mit dem Deponiermittel in Kontakt gebracht und gleichzeitig über den Bypass an dem Magazin vorbeigeführt werden.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt, in jeweils stark vereinfachter Darstellung
- Fig. 1: eine zweidimensionale Schnittdarstellung einer Vorrichtung zur Überwachung von Verunreinigungen in einer kontrollierten Umgebung mit mehreren Deponiermitteln, die in einem Magazin vorhaltbar sind,
- Fig. 2.1 bis 2.3: ein Verfahren zur Überwachung von Verunreinigungen in einer kontrollierten Umgebung mit den Verfahrensschritten A bis I,
- Fig. 3: ein Wechsel eines Deponiermittels in einer Vorrichtung gemäß Fig. 1,
- Fig. 4: eine zweidimensionale Schnittdarstellung einer Vorrichtung zur Überwachung von Verunreinigungen mit Rückhaltemittel und Deponiermittelablage, die mit einer Zugangsöffnung zusammenwirkt,
- Fig. 5: eine dreidimensionale Darstellung einer Vorrichtung zur Überwachung von Verunreinigungen in einer kontrollierten Umgebung mit Fördervorrichtung und Handhabungseinrichtung,
- Fig. 6.1 bis 6.6: eine dreidimensionale Darstellung einer Vorrichtung zur Überwachung von Verunreinigungen in einer kontrollierten Umgebung mit Fördervorrichtung und Handhabungseinrichtung, über die ein Wechsel von Deponiermitteln ermöglicht ist,
- Fig. 7: eine Deponiermittelvorrichtung mit Bypass und Sauganschluss.

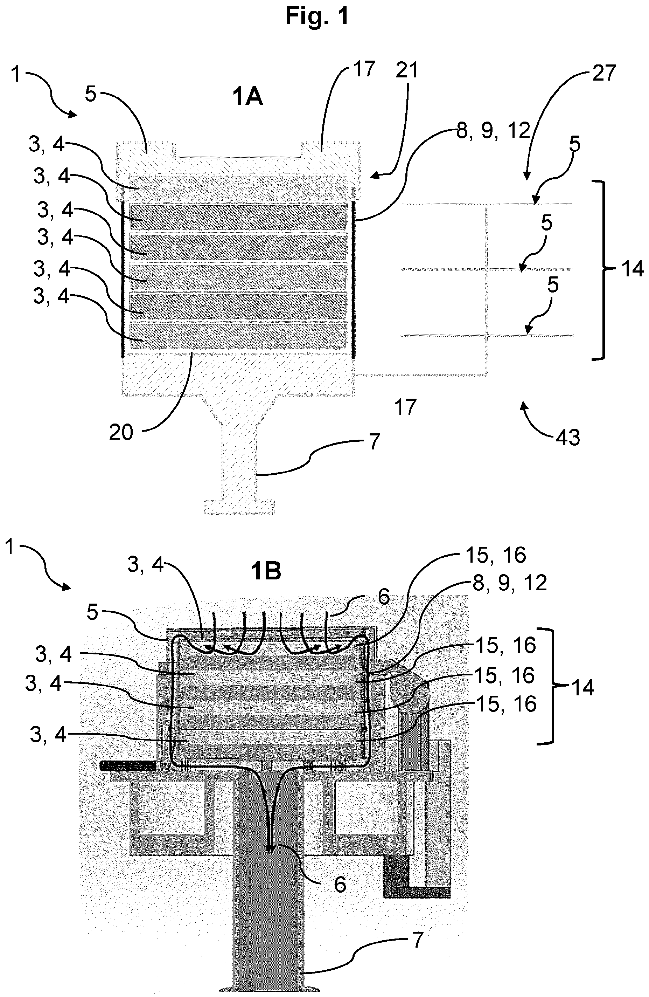

Fig. 1 zeigt in der Darstellung 1A und 1B eine im Ganzen mit 1 bezeichnete Vorrichtung zur Überwachung von Verunreinigungen in einer hierin nicht näher dargestellten kontrollierten Umgebung 2. Hierbei ist ein Deponiermittel 3, im dargestellten Ausführungsbeispiel 1A und 1B ein Nährmedium 4, in einer Deponiermittelaufnahme 5 präsentierbar, wobei mehrere Deponiermittel 3, hier sechs Deponiermittel 3 in der Darstellung 1A und vier Deponiermittel 3 in der Darstellung 1B, in einem Magazin 8 vorhaltbar sind.

Die Vorrichtung 1 kann an eine Schnittstelle einer kontrollierten Umgebung 2 angebracht werden, wobei, wie in Darstellung 1B schematisch dargestellt, ein Luftstrom 6 aus der kontrollierten Umgebung 2 von der Deponiermittelaufnahme 5 zu einem Sauganschluss 7 geführt ist.

Dargestellt ist in den Darstellungen 1A und 1B der Fig. 1 ferner, dass das Magazin 8 zwischen der Deponiermittelaufnahme 5 und dem Sauganschluss 7 angeordnet ist und dass der von der Deponiermittelaufnahme 5 abgesaugte Luftstrom 6 an dem Magazin 8 vorbeigeführt ist.

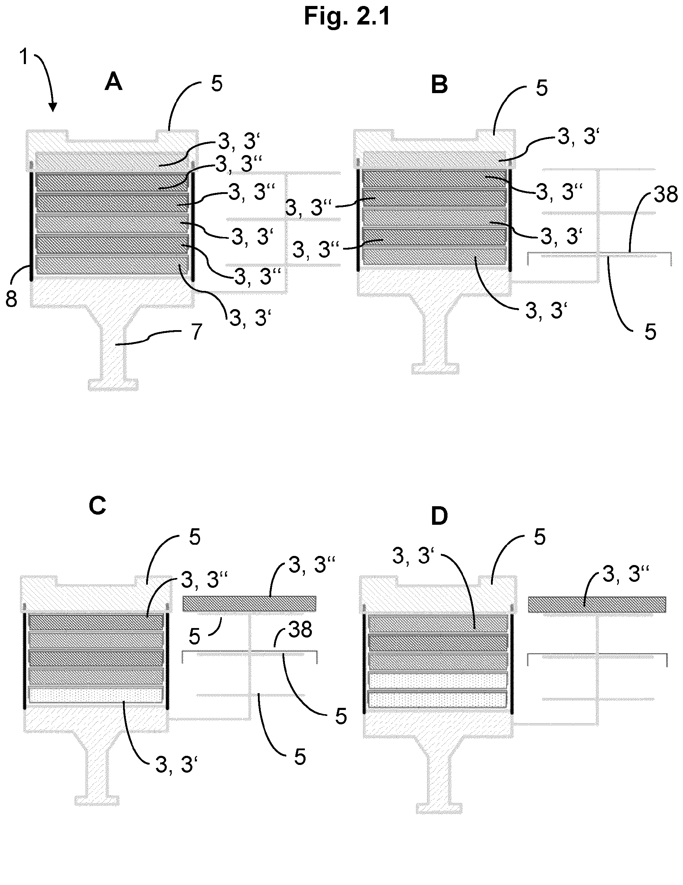

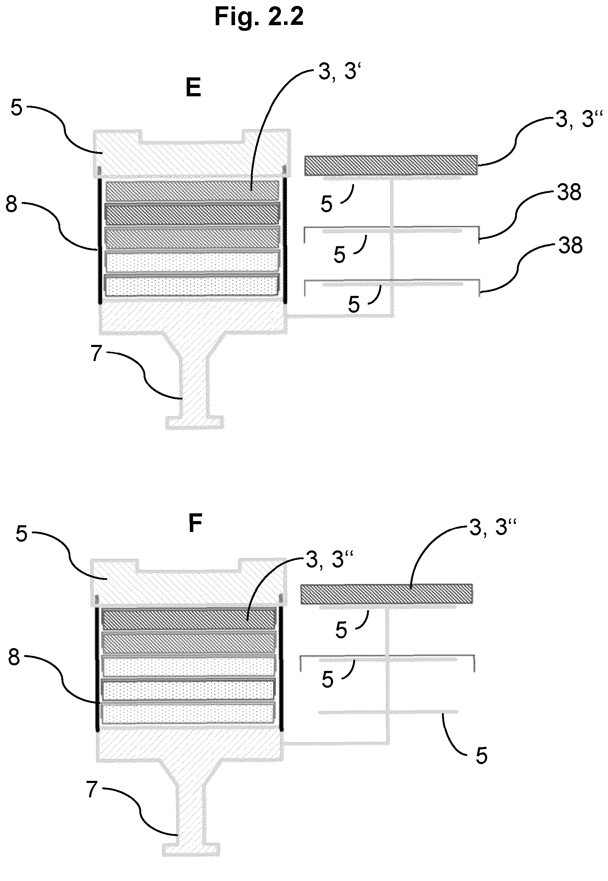

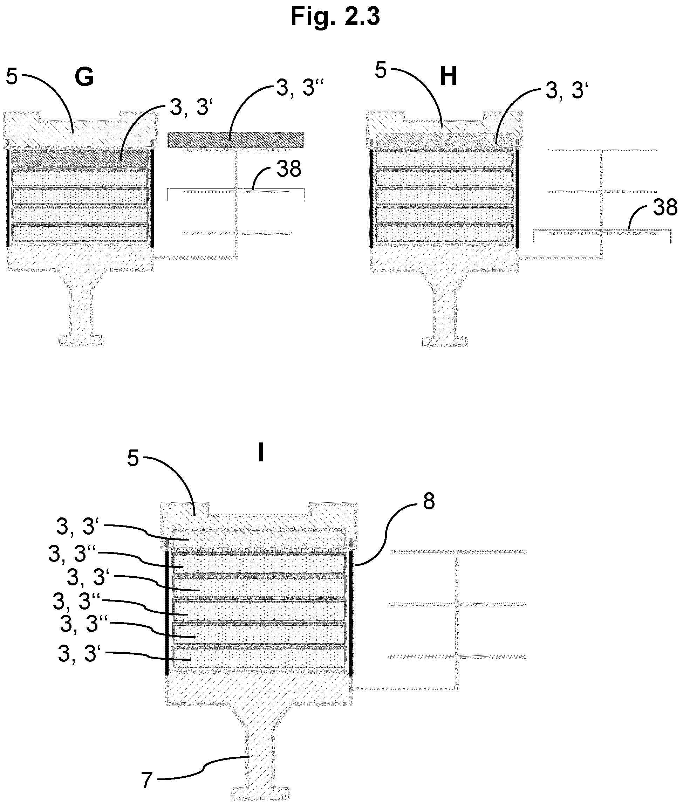

In der Ausführungsform gemäß Darstellung 1A der Fig. 1 weist die Vorrichtung 1 ferner weitere Deponiermittelaufnahmen 5 für eine passive Luftkeimsammlung auf. Dies wird im Ausführungsbeispiel gemäß Fig. 2.1 bis 2.3 nochmals detaillierter beschrieben.

Im dargestellten Ausführungsbeispiel ist das Magazin 8 als first-in-first-out-Speicher 9 ausgebildet, wobei auch vorgesehen sein kann, dass das Magazin 8 als Speicher 10 mit unabhängig voneinander zugänglichen Speicherpositionen 11 ausgebildet ist.

Wie in den nachstehenden Ausführungsbeispielen nochmals erläutert, ist das Magazin 8 ferner als auswechselbare Kassette 12 ausgebildet, über die alle Deponiermittel 3 aus gemeinsam der Vorrichtung 1 entnommen und ausgetauscht werden können.

In der Variante 1B der Fig. 1 sind die vier Deponiermittel 3 in einer Kapselung 15, hier in einer Petrischale 16, angeordnet. Es kann somit gesagt werden, dass das Magazin 8 zur Aufnahme von Deponiermitteln 3, die jeweils in einer Kapselung 15, hier einer Petrischale 16 angeordnet sind, eingerichtet ist und dass das Magazin 8 eine paarweise kontaktierende Stapelanordnung 14 von gekapselten Deponiermitteln 3 aufweist. Die Deponiermittelaufnahme 5 kann dabei als Impaktor 17 ausgebildet sein.

Das Magazin 8 weist ferner an einem von der Deponiermittelaufnahme 5 abgewandten Ende 20 eine Deponiermittelablage 28 mit Zugangsöffnung 18 auf, über die, wie in den nachstehenden Figuren näher dargestellt, Deponiermittel 3 nachgefüllt werden können. An einem der Deponiermittelaufnahme 5 zugewandten Ende 21 weist das Magazin 8 ferner eine Abgabeöffnung 19 auf, über die Deponiermittel 3 entnommen werden können.

Bei einem weiteren Ausführungsbeispiel können die gebrauchten (bspw. beladenen) Deponiermittel 3 in einem weiteren Magazin 43 gespeichert werden, um nach Beendigung des Gesamtprozesses gemeinsam ausgeschleust zu werden.

Fig. 2.1 bis 2.3 zeigen ein Verfahren zur Überwachung von Verunreinigungen in einer kontrollierten Umgebung 2 mit der zuvor beschriebenen Vorrichtung gemäß Variante 1A der Fig. 1 mit den Verfahrensschritten A bis I, auf die nachfolgend näher eingegangen wird.

Funktionell und/oder konstruktiv zu dem vorgehenden Ausführungsbeispiel gleichartige oder identische Bauteile und Funktionseinheiten sind mit denselben Bezugszeichen bezeichnet und nicht noch einmal gesondert beschrieben.

In einem ersten Schritt A wird das Magazin 8 mit den Deponiermitteln 3 bestückt, wobei hierbei drei Deponiermittel 3' zur aktiven Luftkeimsammlung und drei Deponiermittel 3" zur passiven Luftkeimsammlung ausgebildet sind. Vor Beginn der Überwachung der Verunreinigungen aus der kontrollierten Umgebung sind alle im Magazin 8 gestapelten Deponiermittel 3, 3', 3" unbenutzt, sodass gesagt werden kann, dass zunächst unbenutzte Deponiermittel 3, 3', 3", hier gekapselt, im Magazin 8 bereitgehalten werden. Die gesamte Vorrichtung 1 ist hierbei mit der hierin nicht näher dargestellten kontrollierten Umgebung 2 fluidisch gekoppelt, sodass der Fluidstrom 6 über die Saugleitung 7 aus der kontrollierten Umgebung 2 zur Kontaktierung mit dem obersten Deponiermittel 3 abgeführt werden kann. Das oberste Deponiermittel 3 befindet sich dabei bereits in der Deponiermittelaufnahme 5.

Um Verunreinigungen der kontrollierten Umgebung 2 zu überwachen, wird im nächsten Verfahrensschritt B von dem obersten, dem Fluidstrom 6 als erstes zu präsentierendes Deponiermittel 3, hier eines Deponiermittel 3' zur aktiven Luftkeimsammlung, ein Deckel 38 zur Freilegung des Deponiermittels 3, hier des Nährmediums 4, entfernt und auf einer untersten von hier insgesamt drei weiteren Deponiermittelaufnahmen 5 außerhalb des Magazin 8 platziert. Das Verfahren zur Überwachung von Verunreinigungen aus der kontrollierten Umgebung 2 beginnt, sobald ein Vakuum an den Sauganschluss 7 angeschlossen wird, wodurch der Luftstrom 6 aus der kontrollierten Umgebung 2 abgesaugt und über die Deponiermittelaufnahme 5 zum obersten, freigelegten Nährmedium 4 des Magazins 8 geführt wird. Es kann gesagt werden, dass das Deponiermittel 3 hierbei im Luftstrom 6 exponiert wird.

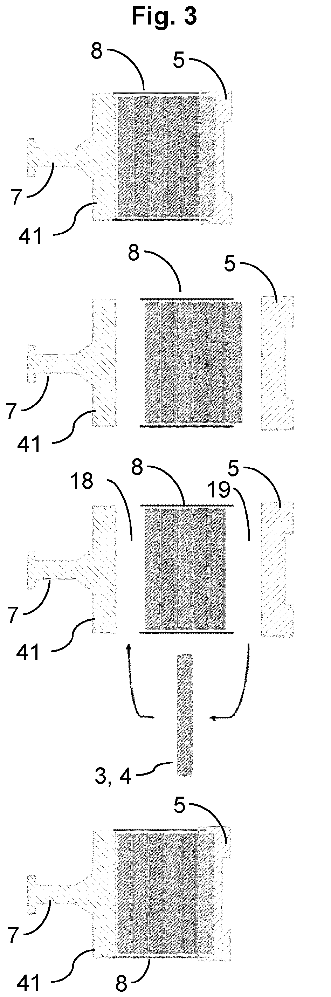

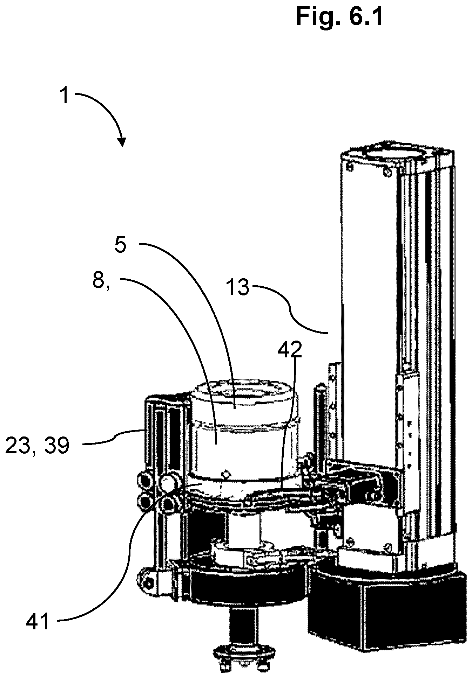

Anschließend wird der Deckel 38 im Verfahrensschritt C wieder auf das nun im Fluidstrom 6 exponierte, verbrauchte Deponiermittel 3' aufgesetzt und, wie in den Ausführungsbeispielen gemäß Fig. 3 und den Fig. 6.1 bis 6.6 gezeigt und beschrieben, über die Abgabeöffnung 19 entnommen und an eine unterste Position im Magazin 8 über die Zugangsöffnung 18 bewegt und eingeschoben.

Das benutzte Deponiermittel 3' erlangt somit die im Verfahrensschritt C dargestellte Position. Durch das Einbringen des benutzten Deponiermittels 3' an die unterste Position im Magazin 8, wird ein unbenutztes, hier zur passiven Keimsammlung ausgebildetes Deponiermittel 3" in die Deponiermittelaufnahme 5 ausgegeben. Es wird darauf hingewiesen, dass es sich dabei auch um ein zur aktiven Luftkeimsammlung ausgebildetes Deponiermittel 3' handeln kann.

Es kann somit gesagt werden, dass durch ein Einbringen eines im Luftstrom 6 exponierten Deponiermittels 3 in das Magazin 8 ein unbenutztes Deponiermittel 3 aus dem Magazin 8 in die Deponiermittelaufnahme 5 ausgegeben wird.

Dem zur passiven Luftkeimsammlung ausgebildete Deponiermittel 3" wird anschließend ebenfalls ein Deckel 38 abgenommen, wobei der Deckel auf einer mittleren Deponiermittelaufnahme 5 und das Deponiermittel 3" selbst auf einer obersten Deponiermittelaufnahme 5 außerhalb des Magazins 8 positioniert wird. Zur passiven Luftkeimsammlung wird kein Fluidstrom 6 über die Saugleitung 7 geführt, da sich das zur Luftkeimsammlung ausgebildete Deponiermittel 3" nicht innerhalb des Magazins 8 befindet.

Nach maximal vier Stunden wird der Deckel 38 wieder auf das im Verfahrensschritt C zur passiven Luftkeimsammlung ausgebildete Deponiermittel 3", hier ebenfalls ein Nährmedium 4, aufgesetzt. Das verbrauchte Deponiermittel 3" wird in bereits beschriebener Art und Weise in das Magazin 8 eingebracht, nachdem ein ebenfalls zur passiven Luftkeimsammlung ausgebildetes Deponiermittel 3'', welches im Verfahrensschritt C an oberster Position des Magazins 8 positioniert war, aus dem Magazin 8 in bereits beschriebener Art und Weise herausgenommen und, wie im Verfahrensschritt D dargestellt, ebenfalls auf einer Deponiermittelaufnahme 5 außerhalb des Magazins 8 positioniert und der Deckel 38 abgenommen wurde.

Das Einbringen des zuvor benutzten, zur passiven Luftkeimsammlung ausgebildeten Deponiermittel 3" führt dazu, dass ein weiteres, unverbrauchtes und zur aktiven Luftkeimsammlung ausgebildetes Deponiermittel 3' aus dem Magazin 8 in die Deponiermittelaufnahme 5 ausgegeben wird.

Sobald der Deckel 38 des Deponiermittels 3' gemäß Verfahrensschritt E zur aktiven Luftkeimsammlung abgenommen und auf der untersten Deponiermittelaufnahme 5 außerhalb des Magazins 8 positioniert ist, ist, nachdem auch der Deckel 38 des zur passiven Luftkeimsammlung ausgebildeten Deponiermittels 3" abgenommen und auf der mittleren Deponiermittelaufnahme 5 außerhalb des Magazins 8 abgelegt wurde, eine parallele aktive und passive Luftkeimsammlung über die Deponiermittel 3' und 3" ermöglicht.

Wie im Verfahrensschritt F dargestellt, wird anschließend der Deckel 38 des zur aktiven Luftkeimsammlung ausgebildeten Deponiermittels 3' aufgesetzt und in bereits beschriebener Art und Weise an die unterste Position innerhalb des Magazins 8 bewegt und eingeschoben. Innerhalb des Magazins 8 befinden sich somit drei verbrauchte Deponiermittel 3. An oberster Stelle in der Deponiermittelaufnahme 5 des Magazins 8 befindet sich ein unverbrauchtes, zur passiven Luftkeimsammlung ausgebildetes Deponiermittel 3".

Nachdem auch die passive Luftkeimsammlung des zuvor außerhalb des Magazins 8 auf der obersten Deponiermittelaufnahme 5 positionierten Deponiermittels 3" abgeschlossen ist, wird dieses, gemäß Verfahrensschritt G, ebenfalls in das Magazin 8 in bereits beschriebener Art und Weise mit aufgesetztem Deckel 38 eingeschoben. Das zuvor an der Deponiermittelaufnahme 5 des Magazins 8 positionierte Deponiermittel 3" wird zur passiven Luftkeimsammlung aus dem herausgenommen, der Deckel 38 abgenommen und auf der obersten Deponiermittelaufnahme 5 außerhalb des Magazins 8 platziert. Nachdem die passive Luftkeimsammlung erfolgt ist, wird das Deponiermittel 3" mit aufgesetztem Deckel 38 in bereits beschriebener Art und Weise in das Magazin 8 eingeschoben, wodurch ein letztes, unverbrauchtes und zur aktiven Luftkeimsammlung ausgebildetes Deponiermittel 3 von dem Magazin in die Deponiermittelaufnahme 5 ausgegeben wird. Dies ist im Verfahrensschritt H dargestellt. Es folgt eine letzte aktive Luftkeimsammlung.

Anschließend befinden sich, gemäß Verfahrensschritt I, im Magazin 8 sechs verbrauchte Deponiermittel 3, 3', 3''. Das gesamte Magazin 8 mit allen Deponiermitteln 3, 3', 3" kann anschließend zur Auswertung aus der Vorrichtung 1 entnommen werden.

In Fig. 3 ist ein mögliches, jedoch nicht darauf einschränkendes Prinzip eines Deponiermittelwechsels dargestellt. Es zeigt sich, dass Das gesamte Magazin 8 zunächst von der Deponiermittelaufnahme 5 und der einem unteren Abschnitt 41, an dem der Sauganschluss 7 der Vorrichtung 1 ausgebildet ist, fixiert ist. Für einen Wechsel eines oberen Deponiermittels 3 wird die Deponiermittelaufnahme 5 und der untere Abschnitt 41 axial derart bewegt, dass das der Deponieraufnahme 5 zugewandte Deponiermittel 3 herausgenommen und an eine unterste Position des Magazins 8 bewegt werden kann. Anschließend wird die Deponiermittelaufnahme 5 und der untere Abschnitt 41 axial zueinander bewegt, sodass das Magazin 8 wieder fixiert ist.

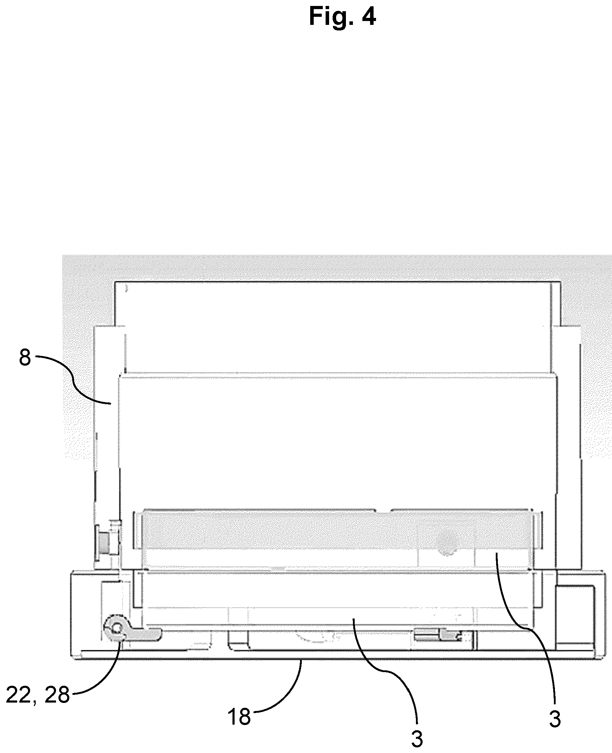

Fig. 4 zeigt eine Variante eines Rückhaltemittels 22 der Deponiermittelablage 28 des Magazins 8 der Vorrichtung 1, wobei die Deponiermittelablage 28 mit der bereits beschriebenen Zugangsöffnung 18 zusammenwirkt, um das Magazin mit hier gekapselten Deponiermitteln 3 zu bestücken. Das Rückhaltemittel 22 ist dabei als drehbar gelagertes Element ausgebildet, das sich zunächst, sobald ein Deponiermittel 3 von unten in die Zugangsöffnung 18 eingeschoben wird, entlang der Einschubbewegung des Deponiermittels 3 mitbewegt und anschließend, sobald des Deponiermittel 3 vollständig eingeschoben wurde, wieder in die Ursprungsposition (wie in Fig. 4 dargestellt) fällt.

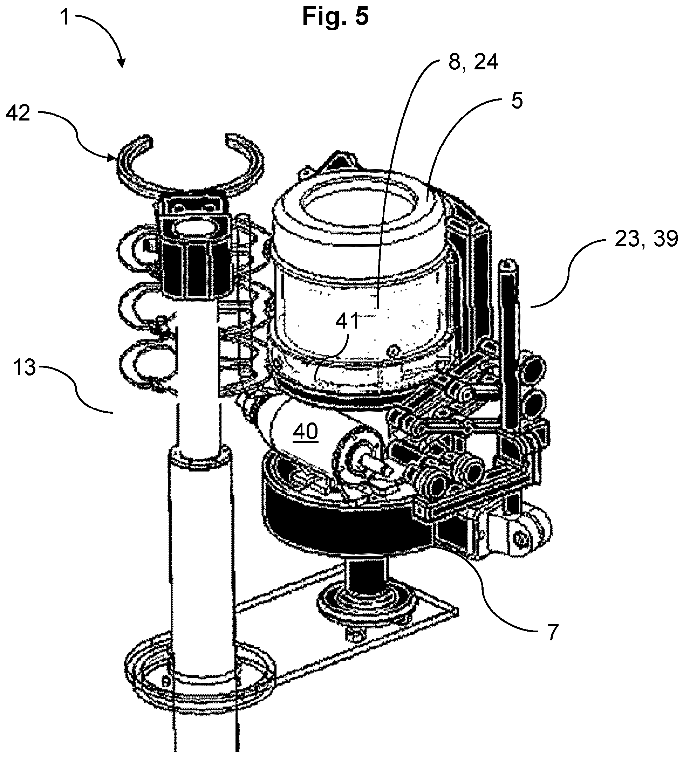

Fig. 5 zeigt die erfindungsgemäße Vorrichtung 1 zur Überwachung von Verunreinigungen in einer kontrollierten Umgebung 2 (hier nicht dargestellt), wobei eine Fördervorrichtung 23 zu einem Bewegen einer Magazinwand 24 des Magazins 8 eingerichtet ist. Die Fördervorrichtung 23 ist dabei als Hubschere 39 ausgebildet, welche über einen Antrieb 40 axial (hoch- und runter) bewegt werden kann, sodass die Deponiermittelaufnahme 5 und ein unterer Abschnitt 41, der Vorrichtung 1 gemäß dem Ausführungsbeispiel nach Fig. 3 bewegt werden und eine Umpositionierung der Deponiermittel 3 in bereits beschriebener Art und Weise erfolgen kann. Es kann ferner gesagt werden, dass die Fördervorrichtung 23 zu einem Transport der vorzugsweise gekapselten Deponiermittel 3 durch das Magazin 8 eingerichtet ist.

Ferner ist eine Handhabungseinrichtung 13 mit einem Greifelement 42 dargestellt und drehbar und axial verschiebbar ausgebildet. Die Handhabungseinrichtung 13 ist dabei, wie in den Fig. 6.1 bis 6.6 näher dargestellt und beschrieben, zu einem Wechsel des Deponiermittels 3 aus dem Magazin 8 eingerichtet, wobei das Greifelement 42 dazu ausgebildet ist, das Deponiermittel 3 zu greifen.

In einem Ausführungsbeispiel ist die Handhabungseinrichtung 13, das Magazin 8 und/oder die Deponiermittelaufnahme 5 an einem gemeinsamen Träger 26, insbesondere dem Sauganschluss 7, befestigt.

Die Fig. 6.1 bis 6.6 stellen nochmals ein mögliches Prinzip zum Wechsel der Deponiermittel 3 mit der Handhabungseinrichtung 13 und der Fördervorrichtung 23 dar, wobei die Handhabungseinrichtung 13 ebenfalls mit einem Greifelement 42 ausgebildet ist.

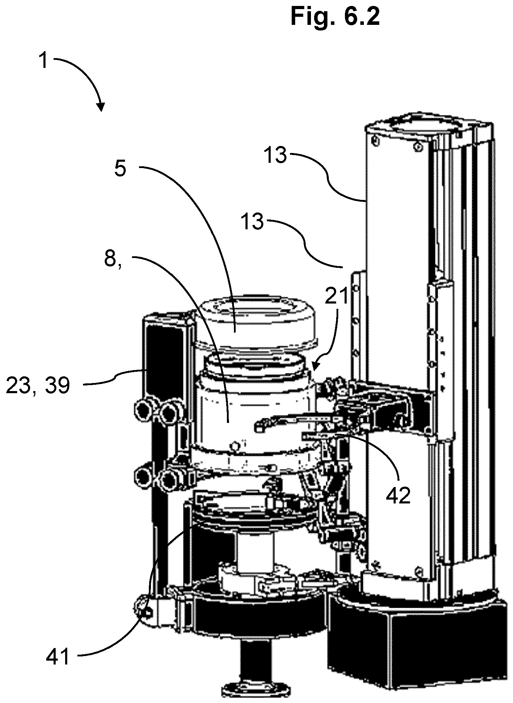

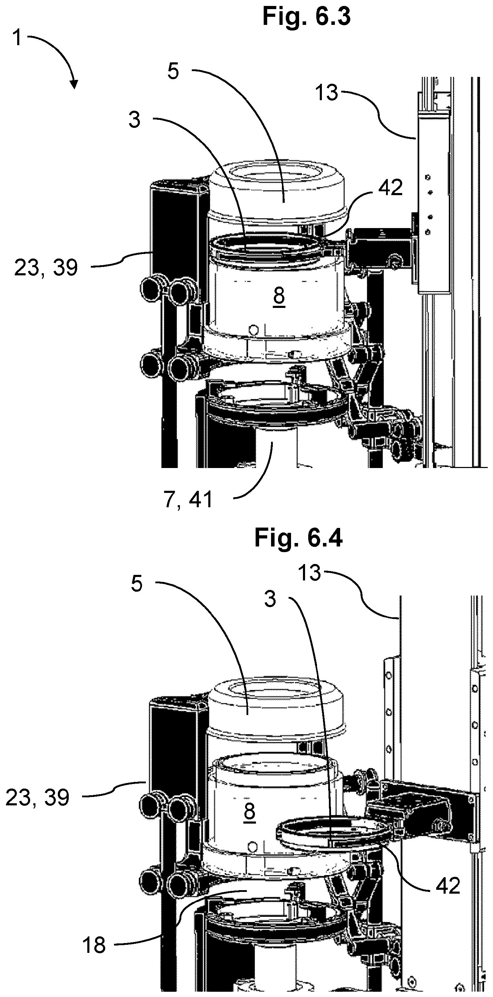

In Fig. 6.1 ist das Magazin 8 mit darin gekapselten Deponiermitteln 3 beladen. Für einen Positionswechsel eines Deponiermittels 3 wird über die Fördervorrichtung 23, hier ebenfalls als angetriebene Hubschere 39 ausgebildet, zunächst, gemäß Fig. 6.2, die Deponiermittelaufnahme 5 und der untere Abschnitt 41 axial voneinander wegbewegt, sodass die Zugangsöffnung 18 des Magazins 8 und die Abgabeöffnung 19 des Magazins 8 freigelegt werden. Das angetriebene Greifelement 42 der Handhabungseinrichtung 13 wird in Richtung des der Deponiermittelaufnahme 5 zugewandten Deponiermittels 3 axial bewegt. Sobald sich das Greifelement 42 auf Höhe des zu wechselnden Deponiermittels 3 befindet, wird das Greifelement 42, gemäß Fig. 6.3, derart geschwenkt und ausgerichtet, dass das hier gekapselte Deponiermittel 3 an einem Außenumfang von dem Greifelement 42 gegriffen werden kann. Nachdem das Greifelement 42 der Handhabungseinrichtung 13 des Deponiermittel 3 gegriffen hat, wird dieses erneut geschwenkt und axial in Richtung Zugangsöffnung 18 bewegt, wie in Fig.6.4 dargestellt.

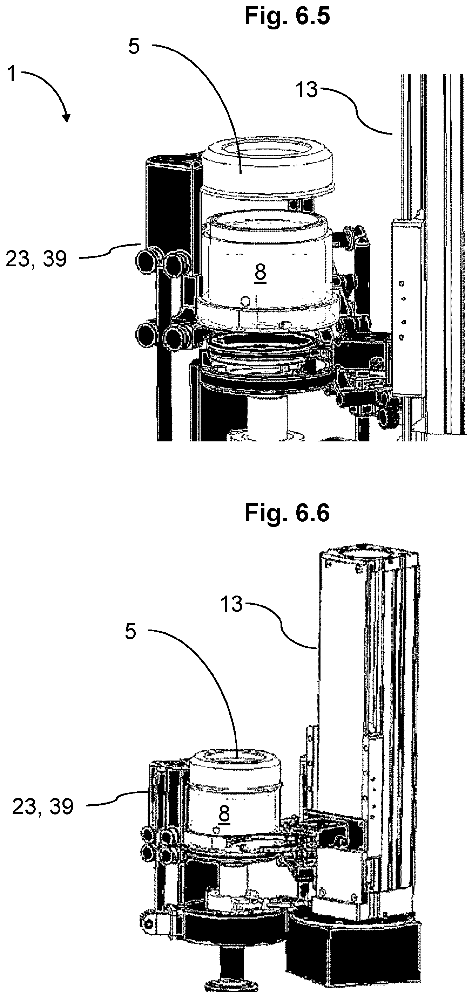

Sobald die Position der Zugangsöffnung 18 erreicht ist, wird das von dem Greifelement 42 gehaltene Deponiermittel 3 geschwenkt und an einer dem unteren Abschnitt 41 zugewandten Position platziert und losgelassen (Fig. 6.5). Anschließend wird, gemäß Fig. 6.6, der untere Abschnitt 41 und die Deponiermittelaufnahme 5 von der Fördervorrichtung 23 derart axial zueinander bewegt, bis die Ausgangsposition gemäß Fig. 6.1 erreicht ist.

Es kann ferner gesagt werden, dass die Handhabungseinrichtung 13 zu einem Öffnen und/oder Schließen der Kapselung 15, hier der Petrischalen 16, der Deponiermittel 3 eingerichtet ist. Somit können beispielsweise bereits beschriebene Deckel 38 zum Freilegen oder Verschließen des Deponiermittels 3 entfernt oder aufgesetzt werden.

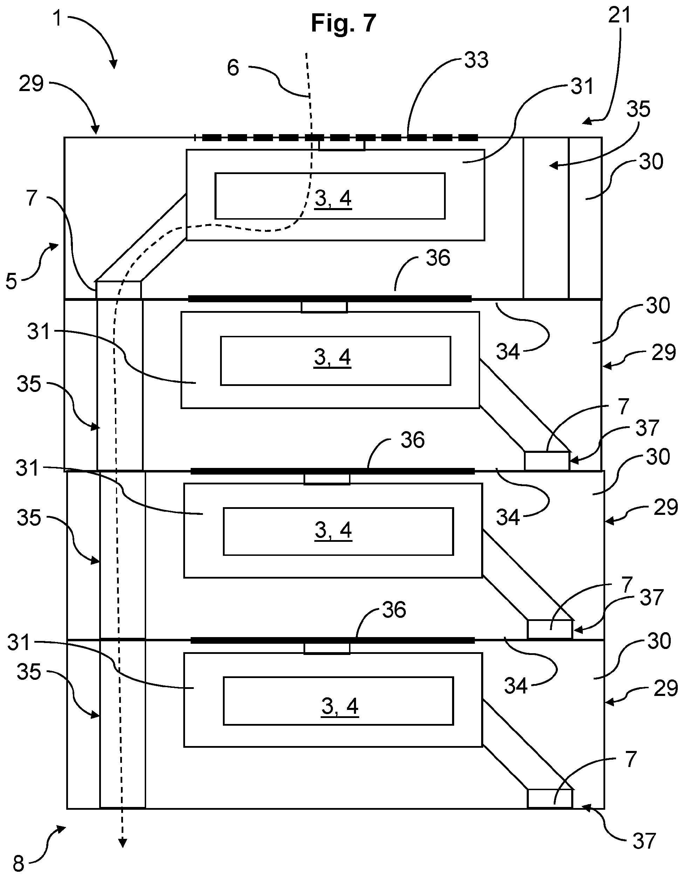

Fig. 7 zeigt eine erfindungsgemäße Deponiervorrichtung 29, mit der ebenfalls das bereits beschriebene Verfahren zur Überwachung von Verunreinigungen in einer kontrollierten Umgebung 2 durchführbar ist.

Die Deponiervorrichtung 29 hat ein Gehäuse 30, das einen Innenraum 31 aufweist, in dem ein Deponiermittel 3, hier ein Nährmedium 4, angeordnet ist. An einer Oberseite 32 des Gehäuses 30 ist eine Einlassöffnung 33 ausgebildet, die in den Innenraum 31 führt, wobei an einer Unterseite 34 des Gehäuses 30 der oder ein Sauganschluss 7 ausgebildet ist, über den der oder ein Luftstrom 6 aus dem Innenraum 31 absaugbar ist.

Zwischen der Unterseite 34 und der Oberseite 32 ist ein Bypass 35 derart ausgebildet, dass in einer Stapelanordnung 14 von Deponiermitteln 3 der Bypass 35 einer unten liegenden Deponiervorrichtung 29 wahlweise mit dem Bypass 35 oder dem Sauganschluss 7 einer oben liegenden Deponiervorrichtung 29 fluidisch verbindbar ist.

Hierbei bildet das Deponiermittel 3 mit der Einlassöffnung 33 einen Impaktor 17. Die Einlassöffnung 33 ist dabei mit einem abnehmbaren Verschluss 36 versehen, welcher beispielsweise mit der bereits beschriebenen Handhabungseinrichtung 13 abgenommen oder aufgesetzt werden kann.

Ferner ist der Sauganschluss 7 mit einem hierin nicht näher dargestellten Sicherungselement 37, insbesondere einem Rückschlagventil 37', versehen, das außerhalb eines Gebrauchszustands den Innenraum 31 abschließt.

Im gezeigten Ausführungsbeispiel umfasst die Vorrichtung 1 zur Überwachung von Verunreinigungen in einer kontrollierten Umgebung (beispielhaft) vier in Stapelanordnung 14 angeordnete Deponiervorrichtungen 29. In der Praxis können es mehr als vier oder weniger als vier Deponiervorrichtung 29 sein.

Die oberste Deponiervorrichtung 29 ist an dessen Sauganschluss 7 mit dem Bypass 35 der drei darunter liegenden Deponiervorrichtungen 29 fluidisch verbunden, sodass der Luftstrom 6 aus der kontrollierten Umgebung 2 abgesaugt und das in der obersten Deponiervorrichtung 29 platzierte Deponiermittel 3, hier ein Nährmedium 4, passieren kann. Die Einlassöffnung 33 ist hierbei geöffnet. Mittels Bypass 35 kann erreicht werden, dass der Fluidstrom 6 an den nicht in diesem exponierenden Deponiervorrichtungen 29 vorbeigeführt werden kann. Die oberste Deponiervorrichtung 29 ist somit in der Deponiermittelaufnahme 5 angeordnet, und die darunter liegenden Deponiervorrichtungen 29 bilden ein Magazin 8.

Dabei kann vorgesehen sein, dass die wahlweise herstellbaren fluidischen Verbindungen durch eine Relativbewegung, beispielsweise durch eine Drehung der Deponiervorrichtungen 29 gegeneinander, wechselbar sind.

Es kann gesagt werden, dass der Saugkanal 7 durch eine Relativbewegung einer ersten Deponiervorrichtung 29, beispielsweise der obersten Deponiervorrichtung 29, einer Stapelanordnung 14 gegen eine folgende Deponiervorrichtung 29, beispielsweise der darunter liegenden Deponiervorrichtung 29, an den Innenraum 31 der ersten Deponiervorrichtung 29 fluidisch angeschlossen wird.

Ist die oberste Deponiervorrichtung 29 beladen oder verbraucht, so kann sie entfernt werden und das Magazin 8 als ganzes nach oben geschoben werden. Die nächste Deponiervorrichtung 29 gelangt somit in die Deponiermittelaufnahme 5. Wird diese Deponiervorrichtung 29 nun gedreht, bis deren Sauganschluss 7 mit dem Bypass 35 der darunter liegenden Deponiervorrichtung 29 fluidisch kommuniziert, so ist die neue oberste Deponiervorrichtung 29 nach Entfernen ihres Verschlusses 36 betriebsbereit und kann neu beladen werden. Die verbrauchte oder beladene Deponiervorrichtung 29 kann unten am Magazin 8, beispielsweise in der bereits beschriebenen Weise, angefügt werden, wobei deren Bypass 35 zum Saugen verwendet werden kann.

Die Sauganschlüsse 7 jeder Deponiervorrichtung 29 können Rückschlagventile 37', beispielsweise Schnabelventile oder Stößelventile, oder sonstige Sicherungselemente aufweisen, um eine inkontrollierte Kontamination des Innenraums 31 zu vermeiden.

In sämtlichen dargestellten Ausführungsbeispielen kann vorgesehen sein, dass eine nicht näher dargestellte Leseeinrichtung 25 zum Auslesen wenigstens einer an den vorzugsweise gekapselten Deponiermitteln 3 angebrachten Informationen (nicht dargestellt) eingerichtet ist, insbesondere bei einem in der Deponiermittelaufnahme 5 angeordneten Deponiermittel 3.

Der Erfindung liegt die Aufgabe zugrunde, über eine Vorrichtung 1 mit mehreren in einem Magazin 8 stapelbaren Deponiermitteln 3, dessen jeweilige Position innerhalb des Magazins 8 gewechselt werden kann, eine Überwachung von Verunreinigungen in einer kontrollierten Umgebung 2 zu vereinfachen und einen schnellen Wechsel von gebrauchten Deponiermitteln 3, die zur Überwachung der Verunreinigungen verwendet wurden, zu ermöglichen und diese durch im Magazin 8 positionierte, ungebrauchte Deponiermittel 3 auszutauschen, wobei die gebrauchten Deponiermittel 3 ebenfalls im Magazin 8 zwischengespeichert werden.

### Bezugszeichenliste

- 1: Vorrichtung
- 2: kontrollierte Umgebung
- 3: Deponiermittel
- 3': Deponiermittel
- 3": Deponiermittel
- 4: Nährmedium
- 5: Deponiermittelaufnahme
- 6: Luftstrom
- 7: Sauganschluss
- 8: Magazin
- 9: First-in-first-out-Speicher
- 10: Speicher
- 11: Speicherposition
- 12: Kassette
- 13: Handhabungseinrichtung
- 14: Stapelanordnung
- 15: Kapselung
- 16: Petrischale
- 17: Impaktor
- 18: Zugangsöffnung
- 19: Abgabeöffnung
- 20: abgewandtes Ende
- 21: zugewandtes Ende
- 22: Rückhaltemittel
- 23: Fördervorrichtung
- 24: Magazinwand
- 25: Leseeinrichtung
- 26: Träger
- 27: passive Luftkeimsammlung
- 28: Deponiermittelablage
- 29: Deponiervorrichtung
- 30: Gehäuse
- 31: Innenraum
- 32: Oberseite
- 33: Einlassöffnung
- 34: Unterseite
- 35: Bypass
- 36: Verschluss
- 37: Sicherungselement
- 37': Rückschlagventil
- 38: Deckel
- 39: Hubschere
- 40: Antrieb
- 41: unterer Abschnitt
- 42: Greifelement
- 43: weiteres Magazin

## Patentansprüche

1. Vorrichtung (1) zur Überwachung von Verunreinigungen in einer kontrollierten Umgebung (2), wobei ein Deponiermittel (3), insbesondere ein Nährmedium (4), in einer Deponiermittelaufnahme (5) präsentierbar ist und ein Luftstrom (6) von der Deponiermittelaufnahme (5) zu einem Sauganschluss (7) geführt ist, wobei mehrere Deponiermittel (3) in einem Magazin (8) vorhaltbar sind, **dadurch gekennzeichnet, dass** das Magazin (8) zwischen der Deponiermittelaufnahme (5) und dem Sauganschluss (7) angeordnet ist und dass der von der Deponiermittelaufnahme (5) abgesaugte Luftstrom (6) an dem Magazin () vorbeigeführt ist.

2. Vorrichtung (1) nach Anspruch 1, **dadurch gekennzeichnet, dass** das Magazin ein first-in-first-out-Speicher (9) oder ein Speicher (10) mit unabhängig voneinander zugänglichen Speicherpositionen (11) ist oder dass benutzte Deponiermittel (3) in einem weiteren Magazin (43) gespeichert werden.

3. Vorrichtung (1) nach einem der vorangehenden Ansprüche, **dadurch gekennzeichnet, dass** das Magazin (8) als auswechselbare Kassette (12) ausgebildet ist.

4. Vorrichtung (1) nach einem der vorangehenden Ansprüche, **dadurch gekennzeichnet, dass** eine Handhabungseinrichtung (13) zu einem Wechsel des Deponiermittels (3) aus dem Magazin (8) eingerichtet ist.

5. Vorrichtung (1) nach einem der vorangehenden Ansprüche, **dadurch gekennzeichnet, dass** das Magazin (8) eine vorzugsweise paarweise kontaktierende Stapelanordnung (14) von vorzugsweise gekapselten Deponiermitteln (3) vorhält.

6. Vorrichtung (1) nach einem der vorangehenden Ansprüche, **dadurch gekennzeichnet, dass** das Magazin (8) zur Aufnahme von Deponiermitteln (3), die jeweils in einer Kapselung (15), insbesondere in einer Petrischale (16) oder einem Impaktor (17) angeordnet sind, eingerichtet ist.

7. Vorrichtung (1) nach einem der vorangehenden Ansprüche, **dadurch gekennzeichnet, dass** die Deponiermittelaufnahme (5) als ein Impaktor (17) ausgebildet ist.

8. Vorrichtung (1) nach einem der vorangehenden Ansprüche, **dadurch gekennzeichnet, dass** das Magazin (8) an einem von der Deponiermittelaufnahme (5) abgewandten Ende (20) eine Zugangsöffnung (18) aufweist.

9. Vorrichtung (1) nach einem der vorangehenden Ansprüche, **dadurch gekennzeichnet, dass** das Magazin (8) an einem der Deponiermittelaufnahme (5) zugewandten Ende (21) eine Abgabeöffnung (19) aufweist.

10. Vorrichtung (1) nach einem der vorangehenden Ansprüche, **dadurch gekennzeichnet, dass** das Magazin (8) an der oder einer Zugangsöffnung (18) ein Rückhaltemittel (22) aufweist.

11. Vorrichtung (1) nach einem der vorangehenden Ansprüche, **dadurch gekennzeichnet, dass** eine Fördervorrichtung (23) zu einem Transport von vorzugsweise gekapselten Deponiermitteln (3) durch das Magazin (8) eingerichtet ist.

12. Vorrichtung (1) nach einem der vorangehenden Ansprüche, **dadurch gekennzeichnet, dass** die oder eine Fördervorrichtung (23) zu einem Bewegen einer Magazinwand (24) eingerichtet ist.

13. Vorrichtung (1) nach einem der vorangehenden Ansprüche, **dadurch gekennzeichnet, dass** eine Leseeinrichtung (25) zum Auslesen wenigstens einer an den vorzugsweise gekapselten Deponiermitteln (3) angebrachten Information eingerichtet ist, insbesondere bei einem in der Deponiermittelaufnahme (5) angeordneten Deponiermittel (3).

14. Vorrichtung (1) nach einem der vorangehenden Ansprüche, **dadurch gekennzeichnet, dass** die oder eine Handhabungseinrichtung (13) zu einem Öffnen und/oder Schließen der oder einer Kapselung (15) der Deponiermittel (3) eingerichtet ist.

15. Vorrichtung (1) nach einem der vorangehenden Ansprüche, **dadurch gekennzeichnet, dass** die oder eine Handhabungseinrichtung (13) und das Magazin (8) und/oder die Deponiermittelaufnahme (5) an einem gemeinsamen Träger (26) befestigt sind, insbesondere an dem Sauganschluss (7).

16. Vorrichtung (1) nach einem der vorangehenden Ansprüche, **dadurch gekennzeichnet, dass** eine weitere Deponiermittelaufnahme (5) für eine passive Luftkeimsammlung (27) eingerichtet ist.

17. Vorrichtung (1) nach einem der vorangehenden Ansprüche, **dadurch gekennzeichnet, dass** das Magazin (8) eine Deponiermittelablage (28) hat, welche mit der oder einer Zugangsöffnung (18) zusammenwirkt, um das Magazin (8) mit einem vorzugsweise gekapselten Deponiermittel (3) zu bestücken.

18. Deponiervorrichtung (29), mit einem Gehäuse (30), das einen Innenraum (31) aufweist, in dem ein Deponiermittel (3), insbesondere ein Nährmedium (4), angeordnet ist, wobei an einer Oberseite (32) des Gehäuses (30) eine Einlassöffnung (33) ausgebildet ist, die in den Innenraum (31) führt, und wobei an einer Unterseite (34) des Gehäuses (30) ein Sauganschluss (7) ausgebildet ist, über den Luft aus dem Innenraum (31) absaugbar ist, **dadurch gekennzeichnet, dass** zwischen der Unterseite (34) und der Oberseite (32) ein Bypass (35) derart ausgebildet ist, dass in einer Stapelanordnung (14) von Deponiervorrichtungen (29) der Bypass (35) einer unten liegenden Deponiervorrichtung (29) wahlweise mit dem Bypass (35) oder dem Sauganschluss (7) einer oben liegenden Deponiervorrichtung (29) fluidisch verbindbar ist.

19. Deponiervorrichtung (29) nach dem vorangehenden Anspruch, **dadurch gekennzeichnet, dass** das Deponiermittel (3) mit der Einlassöffnung (33) einen Impaktor (17) bildet.

20. Deponiervorrichtung (1) nach einem der vorangehenden Ansprüche, **dadurch gekennzeichnet, dass** die Einlassöffnung (33) mit einem abnehmbaren Verschluss (36) versehen ist.

21. Deponiervorrichtung (29) nach einem der vorangehenden Ansprüche, **dadurch gekennzeichnet, dass** der Sauganschluss (7) mit einem Sicherungselement (37) versehen ist, der außerhalb eines Gebrauchszustands den Innenraum (31) abschließt.

22. Verfahren zur Überwachung von Verunreinigungen in einer kontrollierten Umgebung (2), **dadurch gekennzeichnet, dass** eine Vorrichtung (1) zur Überwachung von Verunreinigungen nach einem der Ansprüche 1 bis 17, insbesondere mit einer Deponiervorrichtung (29) nach einem der Ansprüche 18 bis 21, verwendet wird.

23. Verfahren nach dem vorangehenden Anspruch, **dadurch gekennzeichnet, dass** unbenutzte Deponiermittel (3), vorzugsweise gekapselt, im Magazin (8) bereitgehalten werden.

24. Verfahren nach einem der vorangehenden Ansprüche, **dadurch gekennzeichnet, dass** im Luftstrom (6) exponierte Deponiermittel (3), vorzugsweise gekapselt, in das Magazin (8) verbracht werden.

25. Verfahren nach einem der vorangehenden Ansprüche, **dadurch gekennzeichnet, dass** durch ein Einbringen eines im Luftstrom (6) exponierten, vorzugsweise gekapselten, Deponiermittels (3) in das Magazin (8) ein unbenutztes, vorzugsweise gekapseltes, Deponiermittel (3) aus dem Magazin (8) in die Deponiermittelaufnahme (5) ausgegeben wird.

26. Verfahren nach einem der vorangehenden Ansprüche, **dadurch gekennzeichnet, dass** ein Saugkanal (7) durch eine Relativbewegung einer ersten Deponiervorrichtung (29) einer Stapelanordnung (14) gegen eine folgende Deponiervorrichtung (29) an den Innenraum (31) der ersten Deponiervorrichtung (29) fluidisch angeschlossen wird, insbesondere wobei der Saugkanal (7) zumindest abschnittsweise durch die folgende Deponiervorrichtung (29), insbesondere durch deren Bypass (35), zu deren Innenraum (31) geführt ist.
